# EUROPÄISCHE PATENTSCHRIFT

(11) **EP 2 904 288 B1**
(45) Veröffentlichungstag und Bekanntmachung des Hinweises auf die Patenterteilung: **15.02.2017**
(21) Anmeldenummer: 13771531.4
(22) Anmeldetag: 04.10.2013
(51) Int. Cl.: F16F 9/348, F16F 9/512

(54) **DÄMPFUNGSVENTIL FÜR EINEN STOSSDÄMPFER**
DAMPING VALVE FOR A SHOCK ABSORBER
SOUPAPE D'AMORTISSEMENT POUR UN AMORTISSEUR

(30) Priorität: 04.10.2012 DE 102012109437
(43) Veröffentlichungstag der Anmeldung: 12.08.2015
(73) Patentinhaber: ThyssenKrupp Bilstein GmbH, 58256 Ennepetal (DE)
(72) Erfinder: SMELJANSKIJ, Dmitrij, 51373 Leverkusen (DE); SCHMIDT, Klaus, 51519 Odenthal (DE); GÖTZ, Ole, 38112 Braunschweig (DE); HAMERS, Wolfgang, 52428 Jülich (DE); WOENARTA, Freddy, 38116 Braunschweig (DE)
(74) Vertreter: ThyssenKrupp Intellectual Property GmbH
(86) Internationale Anmeldenummer: PCT/EP2013/070719
(87) Internationale Veröffentlichungsnummer: WO 2014/053639

(56) Entgegenhaltungen:
- DE-B- 1 265 501
- GB-A- 1 351 916
- US-A- 4 972 929

## Beschreibung

Die vorliegende Erfindung betrifft ein Dämpfungsventil für einen Stoßdämpfer, umfassend einen Grundkörper mit einem ersten Stützkörper und mit einem zweiten Stützkörper und umfassend eine oder mehrere Ventilfederscheiben, die einen ersten Dämpfungsflüssigkeitsraum von einem zweiten Dämpfungsflüssigkeitsraum trennen, wobei die Ventilfederscheiben über eine innere Randabstützung gegen den ersten Stützkörper und eine äußere Randabstützung gegen den zweiten Stützkörper abgestützt sind und die einen Durchlass an Dämpfungsflüssigkeit in beiden Richtungen dadurch steuern, dass sich die Ventilfederscheiben unter elastischer Durchbiegung entweder von der inneren oder von der äußeren Randabstützung abheben.

### STAND DER TECHNIK

Die DE 1 265 501 A zeigt ein Dämpfungsventil für einen Stoßdämpfer mit einem Grundkörper, der endseitig an einer Kolbenstange des Stoßdämpfers angebracht ist. Der Grundkörper des Dämpfungsventils trennt einen ersten Dämpfungsflüssigkeitsraum von einem zweiten Dämpfungsflüssigkeitsraum, wobei der Grundkörper Durchgänge aufweist, über die die Dämpfungsflüssigkeitsräume fluidisch miteinander verbunden sind. Am Grundkörper sind Ventilfederscheiben aufgenommen, die die Durchgänge im Grundkörper verschließen, wenn die Druckdifferenz der Dämpfungsflüssigkeit zwischen den Dämpfungsflüssigkeitsräumen unterhalb eines Grenzwertes bleibt. Wird über die Kolbenstange der Grundkörper des Dämpfungsventils bewegt, so stellt sich eine Druckdifferenz zwischen den Dämpfungsflüssigkeitsräumen ein, die den Grenzwert übersteigen kann, und die Ventilfederscheiben heben entweder von ihrer inneren Randabstützung oder von ihrer äußeren Randabstützung ab, abhängig von der Bewegungsrichtung des Grundkörpers, der in einem nicht gezeigten Stoßdämpferrohr hin- und herbewegt werden kann.

Die Ventilfederscheiben sind über die innere Randabstützung am Grundkörper zentriert aufgenommen, und das Verhalten der elastischen Durchbiegung der Ventilfederscheiben ist durch geometrische und stoffliche Eigenschaften der Ventilfederscheiben bestimmt, wobei ferner das Maß der elastischen Vorspannung der Ventilfederscheiben am Grundkörper das Öffnungsverhalten mitbestimmt. Beispielsweise heben sich stärker vorgespannte, steifer ausgeführte Ventilfederscheiben mit einem geringeren Maß von ihrer Randabstützung ab als elastischere, geringer vorgespannte Ventilfederscheiben.

Bei der gezeigten Dämpfungsanordnung durch die Ventilfederscheiben entsteht der Nachteil, dass das Öffnungsverhalten der Ventilfederscheiben sowohl durch ein Abheben von der inneren Randabstützung als auch durch ein Abheben von der äußeren Randabstützung bereits durch die eingesetzten Ventilfederscheiben festgelegt ist. Folglich ist über die verwendeten Ventilfederscheiben sowohl in der Druckstufe beim Einfahren als auch in der Zugstufe beim Ausfahren das Kraft-Geschwindigkeits-Verhalten des Stoßdämpfers durch die Ventilfederscheiben bereits bestimmt. Somit besteht nachteilhafterweise nicht die Möglichkeit einer getrennten Einstellung des Kraft-Geschwindigkeits-Verhaltens zwischen der Zugstufe und der Druckstufe im Betrieb des Stoßdämpfers.

Die US 4 972 929 A offenbart ein Dämpfungsventil für einen Stoßdämpfer, umfassend einen Grundkörper mit einem ersten Stützkörper und mit einem zweiten Stützkörper und umfassend eine oder mehrere Ventilfederscheiben, die einen ersten

Dämpfungsflüssigkeitsraum von einem zweiten Dämpfungsflüssigkeitsraum trennen, wobei die Ventilfederscheiben über eine innere Randabstützung gegen den ersten Stützkörper und eine äußere Randabstützung gegen den zweiten Stützkörper abgestützt sind und die einen Durchlass an Dämpfungsflüssigkeit in beiden Richtungen dadurch steuern, dass sich die Ventilfederscheiben unter elastischer Durchbiegung entweder von der inneren oder von der äußeren Randabstützung abheben. Der gezeigte Aufbau führ jedoch zu dem Nachteil, dass das Öffnungsverhalten der Ventilfederscheiben für eine getrennte Einstellung der Zug- und der Druckstufe des Schwingungsdämpfers nicht getrennt voneinander beeinflusst werden kann.

### OFFENBARUNG DER ERFINDUNG

Damit ergibt sich die Aufgabe der vorliegenden Erfindung, ein Dämpfungsventil für einen Stoßdämpfer zu schaffen, das bei Ausnutzung einer elastischen Durchbiegung von Ventilfederscheiben eine getrennte Einstellbarkeit des Kraft-Geschwindigkeits-Verhaltens in der Zugstufe und in der Druckstufe eines Stoßdämpfers erlaubt.

Diese Aufgabe wird ausgehend von einem Dämpfungsventil für einen Stoßdämpfer gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass ein hubbeweglicher Steuerkörper vorgesehen ist, der gegen die Ventilfederscheiben vorgespannt ist, sodass über die Vorspannung des Steuerkörpers das Steuerverhalten der Ventilfederscheiben einstellbar ist. Vorteilhafterweise ist der Steuerkörper im Grundkörper des Dämpfungsventils hubbeweglich aufgenommen.

Die durch den hubbeweglichen Steuerkörper erzielbare Einstellbarkeit des Öffnungsverhaltens der Ventilfederscheiben betrifft dabei zumindest eine Öffnungsrichtung, in der sich die Ventilfederscheiben von einer der Randabstützungen abheben. Beim Abheben der Ventilfederscheiben von der Randabstützung muss der hubbewegliche Steuerkörper mitbewegt werden, und durch die einstellbare Vorspannung des Steuerkörpers kann die Abhebekraft der Ventilfederscheiben von der Randabstützung verändert werden. Der Steuerkörper ist dabei mit den Ventilfederscheiben gegen die Randabstützung vorgespannt, und bei Erreichen eines entsprechenden Differenzdruckes zwischen den Dämpfungsflüssigkeitsräumen muss zum Abheben der Ventilfederscheiben von der Randabstützung sowohl die elastische Durchbiegung in die Ventilfederscheiben selbst eingebracht werden als auch der Steuerkörper gegen seine Vorspannung bewegt werden. Wird die Vorspannung des Steuerkörpers verändert, so ändert sich folglich auch das Öffnungsverhalten der Ventilfederscheiben in der zumindest einen Durchlassrichtung. Im Ergebnis wird eine getrennte Einstellbarkeit der Zug- und Druckstufe des Stoßdämpfers erreicht, da die eine Durchlassrichtung ausschließlich beeinflusst bleibt durch das elastische Durchbiegeverhalten der Ventilfederscheiben selbst, und die andere Durchlassrichtung ist beeinflusst durch das elastische Durchbiegeverhalten der Ventilfederscheiben und der Vorspannung des Steuerkörpers.

Gemäß einer vorteilhaften Ausführungsform ist der Steuerkörper durch eine Federanordnung am Grundkörper aufgenommen. Insbesondere kann die Federanordnung durch eine oder mehrere Federscheiben gebildet sein, über die der Steuerkörper in der Hubachse hubbeweglich und zentriert im Grundkörper aufgenommen ist. Vorzugsweise bilden mehrere Federscheiben in aufeinander liegender Anordnung ein Federscheibenpaket, wobei vorteilhafterweise auch die Ventilfederscheiben zur Erfüllung der Ventilfunktion gegen die Randabstützungen ein Federscheibenpaket bilden. Mit dem Federscheibenpaket, das die Federanordnung zur Vorspannung des Grundkörpers bildet, kann dieser die Ventilfederscheiben gegen eine der Randabstützungen vorspannen. Vorzugsweise spannt der Grundkörper über die Federscheiben die Ventiffederscheiben gegen die innere Randabstützung vor, die an einem Abschnitt des Grundkörpers ausgebildet ist. Da die Ventilfederscheiben durch einen axialen Versatz der Randabstützungen gegen diese bereits durch eine elastische Vorbiegung ebenfalls leicht vorgespannt sind, ergibt sich gegen die innere Randabstützung eine Vorspannung durch die elastische Vorspannung der Ventilfederscheiben selbst und durch die Ventilfederscheiben, die den Steuerkörper vorspannen.

Mit besonderem Vorteil können die Ventilfederscheiben am Steuerkörper zentriert aufgenommen sein, und als weitere Zentrierung kann der Steuerkörper über die Federscheiben im Grundkörper zentriert aufgenommen sein. Die Federscheiben zur Vorspannung des Steuerkörpers können ebenfalls unterschiedliche Durchmesser aufweisen, und beispielsweise kann die größte Federscheibe in einem Zentriersitz im Grundkörper zentriert werden. Im Ergebnis ergibt sich eine zentrierte und geführte Anordnung des Steuerkörpers im Grundkörper, und der Grundkörper erstreckt sich ebenfalls in die zentrischen Öffnungen hinein, die in die Federscheiben zur Vorspannung des Steuerkörpers ausgebildet sind. Im Ergebnis ist der Steuerkörper über das Federscheibenpaket im Grundkörper zentriert und hubbeweglich aufgenommen, und die Ventilfederscheiben zur Erfüllung der Ventilfunktion sind am Steuerkörper zentriert aufgenommen. Alternativ können die Ventilfederscheiben auch im Grundkörper zentriert aufgenommen sein. Insbesondere kann die Erfindung auch derart ausgeführt sein, dass ein beispielsweise ringförmiger Steuerköper in ebenfalls vorgespannter Weise im Grundkörper aufgenommen ist, und das Abheben der Ventilfederscheiben von der äußeren Randabstützung mit beeinflusst, während die Ventilfederscheiben lediglich gegen ihre eigene Vorspannung von der inneren Randabstützung abheben können. Damit ist das Prinzip der inneren und äußeren Randabstützung mit und ohne Beeinflussung der zusätzlichen Vorspannung durch den Steuerkörper auch umkehrbar. Ein ringförmiger Steuerköper könnte beispielsweise auch an der Innenwand des Hüllrohres des Grundkörpers hubbeweglich und mit einem Federpaket vorgespannt geführt sein.

Gemäß einer vorteilhaften Ausführungsform zur Bildung des Grundkörpers kann dieser mehrteilig ausgeführt sein. Die mehreren Teile zur Bildung des Grundkörpers können miteinander gefügt sein, beispielsweise durch stoffschlüssige, kraftschlüssige oder formschlüssige Fügeverfahren. Beispielsweise kann der Grundkörper ein Hüllrohr aufweisen, das an einer Kolbenstange aufgenommen werden kann. Weiterhin können der erste und der zweiten Stützkörper innerhalb des Hüllrohres angeordnet und mit diesem verbunden sein. Ein Vorteil eines solchen Grundkörpers ergibt sich insbesondere daraus, dass die innere Randabstützung beispielsweise gegen eine Stützkante am ersten Stützkörper ausgebildet sein kann, und die äußere Randabstützung kann gegen eine Stützkante am zweiten Stützkörper ausgebildet sein. Dabei können sich das Hüllrohr, der erste Stützkörper und/oder der zweite Stützkörper im Wesentlichen rotationssymmetrisch um die Hubachse des Dämpfungsventils erstrecken. Zwischen der inneren Randabstützung am ersten Stützkörper und der äußeren Randabstützung am zweiten Stützkörper kann ein radial umlaufender Abstand vorgesehen sein, über den sich die Ventilfederscheiben umlaufend zwischen der inneren und der äußeren Randabstützung erstrecken, wobei die Ventilfederscheiben die Stützkanten an den Stützkörpern sowohl nach innen als auch nach außen radial überragen, um die Randabstützungen zu schaffen.

Mit weiterem Vorteil kann wenigstens eine der Ventilfederscheiben im Bereich einer Randabstützung einen Schlitz aufweisen, durch den ein Bypass zur Durchströmung mit Dämpfungsflüssigkeit gebildet wird. Der Schlitz kann dabei jede beliebige Geometrie annehmen und dient lediglich zur Schaffung eines Strömungsfensters in der oder in den Ventilfederscheiben, um auch dann eine Durchströmung der Dämpfungsflüssigkeit durch den Ventilsitz zu schaffen, wenn die Ventilfederscheiben auf der jeweiligen Stützkante aufliegen. Insbesondere kann eine Ventilfederscheibe einen Schlitz aufweisen, die damit als Bypassscheibe dient und die diejenige Ventilfederscheibe im Ventilfederpaket bildet, die gegen die Stützkante zur Anlage gelangt. Selbstverständlich kann auch wenigstens eine der Stützkanten zumindest einen Schlitz aufweisen, wodurch der gleiche Bypasseffekt erzielt wird.

Alternativ oder zusätzlich zur Verwendung von geschlitzten Ventilfederscheiben oder geschlitzten Stützkanten besteht die Möglichkeit der Verwendung von Rückschlagventilen mit Bypassfunktion, die im Grundkörper des Dämpfungsventils angeordnet sein können, um im Öffnungszustand eine zusätzliche Durchströmung mit Dämpfungsflüssigkeit zwischen den Dämpfungsflüssigkeitsräumen zu ermöglichen. Damit wird erreicht, dass individuell einstellbare Zug- und Druckstufenanläufe der Stoßdämpferkraft beim Aus- und Einfahren über der Kolbengeschwindigkeit ermöglicht werden. Dabei kann lediglich ein Rückschlagventil im Grundkörper vorgesehen sein, um entweder für die Zug- oder für die Druckstufe eine Bypassfunktion zu bilden, oder es sind zwei gegenläufig wirkende Rückschlagventile im Grundkörper angeordnet, um sowohl für die Zugals auch für die Druckstufe eine Bypassfunktion zu schaffen. Insbesondere für die Zug- und Druckstufenanläufe wirken sich Rückschlagventile positiv aus, und an die nicht linearen Zug-/ oder Druckstufenanläufe kann sich ein linearer Druckbegrenzungsbereich über der Geschwindigkeit anschließen, mit der beispielsweise ein Stoßdämpfer ein- oder ausgefahren wird.

Die Erfindung richtet sich ferner auf einen Stoßdämpfer mit einem Dämpfungsventil, das einen Grundkörper mit einem ersten Stützkörper und mit einem zweiten Stützkörper aufweist und umfassend eine oder mehrere Ventilfederscheiben, die einen ersten Dämpfungsflüssigkeitsraum von einem zweiten Dämpfungsflüssigkeitsraum trennen, wobei die Ventilfederscheiben über eine innere Randabstützung gegen den ersten Stützkörper und eine äußere Randabstützung gegen den zweiten Stützkörper abgestützt sind und die einen Durchlass an Dämpfungsflüssigkeit in beiden Richtungen dadurch steuern, dass sich die Ventilfederscheiben unter elastischer Durchbiegung entweder von der inneren oder von der äußeren Randabstützung abheben. Dabei ist vorgesehen, dass das Dämpfungsventil des Stoßdämpfers einen hubbeweglichen Steuerkörper aufweist, der gegen die Ventilfederscheiben vorgespannt ist, sodass über die Vorspannung des Steuerkörpers das Steuerverhalten der Ventilfederscheiben einstellbar ist. Die weiteren Merkmale und die damit erzielbaren Vorteile, die in Zusammenhang mit dem Dämpfungsventil vorstehend beschrieben sind, finden für den erfindungsgemäßen Stoßdämpfer selbstverständlich in gleicher Weise Berücksichtigung.

Insbesondere kann das Dämpfungsventil an einer Kolbenstange des Stoßdämpfers angeordnet sein, um mit dieser im Stoßdämpferrohr hin- und herzulaufen. Dabei erfüllt das Dämpfungsventil die Dämpfungsfunktion des Stoßdämpfers, wobei alternativ das Dämpfungsventil auch in einem beigeschlossenen Modulrohr außenseitig am Stoßdämpferrohr des Stoßdämpfers angeordnet und mit Dämpfungsflüssigkeit durchströmt werden kann.

Weiterhin kann der Stoßdämpfer vorteilhafterweise mit einem elektrischen Schaltventil ausgebildet sein, wobei das Dämpfungsventil gemäß der vorliegenden Erfindung in Wirkverbindung mit dem Schaltventil im Stoßdämpfer angeordnet ist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine quer geschnittene Ansicht eines Ausführungsbeispiels, das ein Dämpfungsventil für einen Stoßdämpfer mit den Merkmalen der vorliegenden Erfindung zeigt, wobei das Dämpfungsventil im ruhenden Zustand dargestellt ist,
- Figur 2: das Dämpfungsventil, das unter Zug belastet ist, wodurch sich die Ventilfederscheiben unter elastischer Durchbiegung von der inneren Randabstützung abheben,
- Figur 3: das Dämpfungsventil, das unter Druck belastet, wodurch sich die Ventilfederscheiben unter elastischer Durchbiegung von der äußeren Randabstützung abheben,
- Figur 4: ein Diagramm, das den Kraftverlauf über der Geschwindigkeit eines Stoßdämpfers für die Zug- und die Druckstufe zeigt,
- Figur 5: ein Ausführungsbeispiel eines Stoßdämpfers mit einem erfindungsgemäßen Dämpfungsventil, das endseitig an einer Kolbenstange des Stoßdämpfers angeordnet ist und
- Figur 6: ein weiteres Ausführungsbeispiel eines Stoßdämpfers mit einem Dämpfungsventil in Wirkverbindung mit einem elektrischen Schaltventil.

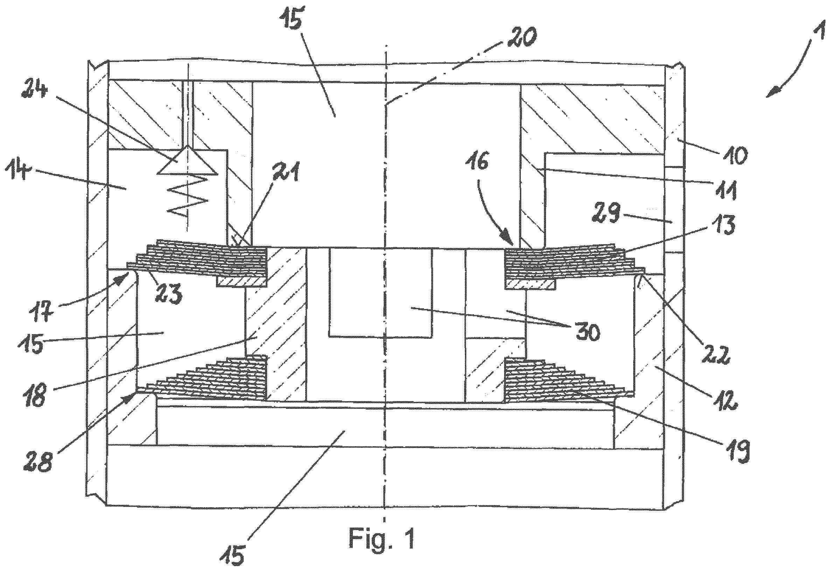

Figur 1 zeigt in einer Querschnittsansicht ein Ausführungsbeispiel eines Dämpfungsventils 1 für einen Stoßdämpfer, und das Dämpfungsventil 1 kann beispielsweise endseitig an der Kolbenstange des Stoßdämpfers angeordnet und im Stoßdämpferrohr geführt sein. Das Dämpfungsventil 1 weist einen Grundkörper 10, 11, 12 auf, der aus einem Hüllrohr 10, einem ersten Stützkörper 11 und einem zweiten Stützkörper 12 gebildet ist. Die Stützkörper 11 und 12 sind im Hüllrohr 10 fest angeordnet, beispielsweise indem diese in das Hüllrohr 10 eingepresst, eingeschweißt oder vorzugsweise eingeschraubt sind, worüber die Vorspannung der Ventilfederscheiben 13 und der Federanordnung 19 verändert werden kann, wenn der Stützkörper 12 unterschiedlich tief in das Hüllrohr 10 eingeschraubt wird. Das Hüllrohr 10 und die Stützkörper 11 und 12 erstrecken sich im Wesentlichen rotationssymmetrisch um die Hubachse 20, die zugleich die Hubachse für eine Kolbenstange bildet, an der das Dämpfungsventil 1 endseitig angeordnet werden kann.

Durch das Dämpfungsventil 1 ist ein erster Dämpfungsflüssigkeitsraum 14 von einem zweiten Dämpfungsflüssigkeitsraum 15 getrennt. Der erste Dämpfungsflüssigkeitsraum 14 ist über ein Öffnungsfenster 29 im Hüllrohr 10 mit der Außenseite des Hüllrohres 10 fluidisch verbunden, und die Außenseite des Hüllrohres 10 kann einen Ringspalt zwischen dem Stoßdämpferrohr und dem Hüllrohr 10 bilden, und dieser Ringspalt stellt den ersten Dämpfungsflüssigkeitsraum 14 dar, der sich in Richtung zur Kolbenstange im Stoßdämpfer fortsetzt. Der zweite Dämpfungsflüssigkeitsraum 15 stellt den der Kolbenstange abgewandten Raum im Stoßdämpfer dar. Dabei sind die Stützkörper 11 und 12 ringförmig ausgebildet und können innenseitig von der Dämpfungsflüssigkeit im zweiten Dämpfungsflüssigkeitsraum 15 durchströmt werden. Auf nicht näher gezeigte Weise ist das Hüllrohr 10 dabei nach oben geschlossen und damit topfförmig ausgebildet.

Am ersten Stützkörper 11 ist eine erste umlaufende Stützkante 21 und am zweiten Stützkörper 12 ist eine zweite umlaufende Stützkante 22 ausgebildet. Zwischen den Stützkanten 21 und 22 ist ein Paket von Ventilfederscheiben 13 angeordnet, die unter leichter elastischer Durchbiegung gegen die Stützkante 21 eine erste, innere Randabstützung 16 und gegen die Stützkante 22 eine äußere, zweite Randabstützung 17 bilden. Dabei können sich die Ventilfederscheiben 13 unter elastischer Durchbiegung entweder von der inneren Randabstützung 16 oder von der äußeren Randabstützung 17 abheben.

Erfindungsgemäß umfasst das Dämpfungsventil 1 weiterhin einen hubbeweglich angeordneten Steuerkörper 18, der gegen die Ventilfederscheiben 13 vorgespannt ist und mit der Vorspannung die Ventilfederscheiben 13 gegen die innere Stützkante 21 dichtend andrückt. Die Vorspannung wird über eine Federanordnung 19 in den Steuerkörper 18 eingebracht, und die Federanordnung 19 besteht wie auch die Ventilfederscheiben 13 beispielhaft aus mehreren ein Paket bildende Federscheiben 19. Die Federscheiben 19 sind innenseitig im zweiten Stützkörper 12 aufgenommen und über einen Zentriersitz 28 in diesem zentriert. Der Steuerkörper 18 erstreckt sich dabei in mittige Öffnungen in die Federscheiben 19 hinein und ist somit über diese gegen den zweiten Stützkörper 12 zentrisch geführt und in der Hubachse 20 beweglich.

Weiterhin sind die Ventilfederscheiben 13 am Steuerkörper 18 zentriert aufgenommen, und durch die Vorspannung der Federscheiben 19 im Zentriersitz 28 des zweiten Stützkörpers 12 spannt dieser die Ventilfederscheiben 13 zentrisch gegen die Stützkante 21 der inneren Randabstützung 16 vor. Dadurch kann das Öffnungsverhalten des Dämpfungsventils 1 in der Zugstufe eingestellt werden, in der die Kolbenstange aus dem Stoßdämpfer ausfährt und in der die Ventilfederscheiben 13 von der inneren Randabstützung 16 abheben, um Dämpfungsflüssigkeit vom ersten Dämpfungsflüssigkeitsraum 14 in den zweiten Dämpfungsflüssigkeitsraum 15 durchzulassen. Sind die Federscheiben 19 stärker vorgespannt oder weisen diese eine höhere Steifigkeit auf, so wird die Dämpfungswirkung in der Zugstufe verstärkt, und sind die Federscheiben 19 geringer vorgespannt oder weicher ausgeführt, so wird die Dämpfungswirkung in der Zugstufe abgeschwächt.

In der Druckstufe, in der der Grundkörper 10, 11 und 12 in Richtung zum zweiten Dämpfungsflüssigkeitsraum 15 nach unten bewegt wird, heben sich die Ventilfederscheiben 13 von der äußeren Stützkante 22 am zweiten Stützkörper 12 ab, sodass sich die äußere Randabstützung 17 der Ventilfederscheiben 13 löst. Dadurch kann Dämpfungsflüssigkeit vom zweiten Dämpfungsflüssigkeitsraum 15 in den ersten Dämpfungsflüssigkeitsraum 14 gelangen. Dabei bestimmt sich die Dämpfungswirkung für die Druckstufe ausschließlich über die Vorspannung und die Steifigkeit der Ventilfederscheiben 13, da diese von der inneren Randabstützung 16 nicht abheben, und der Steuerkörper 18 führt keine Hubbewegung in der Hubachse 20 aus.

Beispielhaft ist die unterste Ventilfederscheibe 13 mit einem Schlitz 23 ausgeführt, durch den auch bei auf der umlaufenden Stützkante 22 aufliegenden Ventilfederscheiben 13 eine zumindest geringe Durchströmung von Dämpfungsflüssigkeit durch den Schlitz 23 möglich ist, um einen entsprechenden Druckstufenanlauf im unteren Geschwindigkeitsbereich zu schaffen.

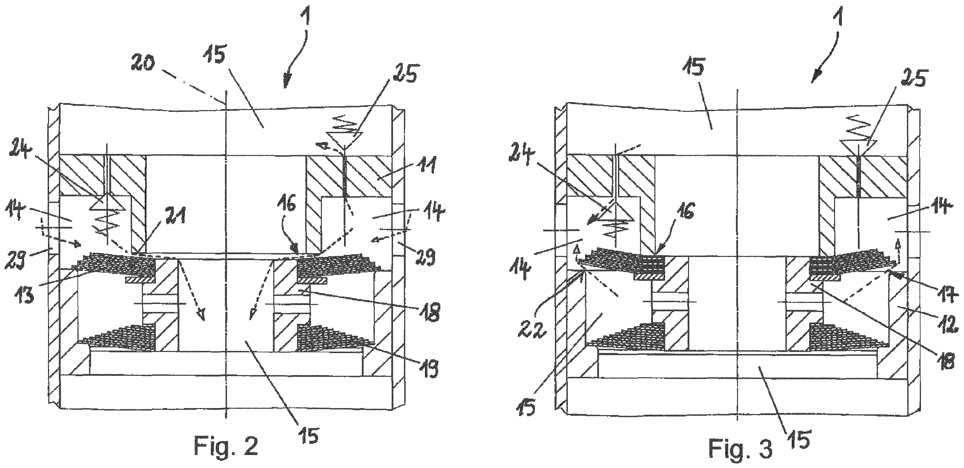

Weiterhin ist im ersten Stützkörper 11 ein Rückschlagventil 24 mit einer Bypassfunktion gezeigt, das in der Druckstufe ein Durchströmen von Dämpfungsflüssigkeit aus dem zweiten Dämpfungsflüssigkeitsraum 15 in den ersten Dämpfungsflüssigkeitsraum 14 ermöglicht. Der Dämpfungsflüssigkeitsraum 15 teilt sich dabei in einen Bereich oberhalb des Steuerkörpers 18 und in einen Bereich unterhalb des Steuerkörpers 18 auf, wobei der Steuerkörper 18 ferner Durchlassöffnungen 30 aufweist, sodass auch der den Steuerkörper 18 ringförmig umgebende Bereich einen Teilbereich des Dämpfungsflüssigkeitsraums 15 bildet. Das Öffnungsverhalten der Ventilfederscheiben 13 und die sich in der Zugstufe und der Druckstufe des Dämpfungsventils 1 ergebenden Strömungspfade sind in den folgenden Figuren 2 und 3 näher beschrieben.

Figur 2 zeigt ein Dämpfungsventils 1 in einer Zugstufe, in der das Dämpfungsventil 1 beispielsweise endseitig an einer Kolbenstange eines Stoßdämpfers in der gezeigten Ansicht nach oben bewegt wird, sodass Dämpfungsflüssigkeit vom ersten Dämpfungsflüssigkeitsraum 14 durch eine Druckdifferenz in den zweiten Dämpfungsflüssigkeitsraum 15 strömt. Die Dämpfungsflüssigkeit kann durch die Öffnungsfenster 29 im Hüllrohr 10 in den ersten Dämpfungsflüssigkeitsraum 14 einströmen, und in diesem einen höheren Druck aufbauen als der Druck der Dämpfungsflüssigkeit, die sich im Dämpfungsflüssigkeitsraum 15 befindet. Dadurch entsteht eine Druckbeaufschlagung der Ventilfederscheiben 13 von der Oberseite, und die Ventilfederscheiben 13 heben sich mit ihrer inneren Randabstützung 16 von der Steuerkante 21 am ersten Stützkörper 11 ab. Durch gestrichelte Linien ist der Strömungspfad der Dämpfungsflüssigkeit vom ersten Dämpfungsflüssigkeitsraum 14 in den zweiten Dämpfungsflüssigkeitsraum 15 gezeigt, und der Steuerkörper 18 hat in Richtung zur Hubachse 20 eine Hubbewegung ausgeführt, sodass sich die Ventilfederscheiben 13 von der Stützkante 21 abheben konnten. Die Hubbewegung des Steuerkörpers 18 erfolgt dabei unter elastischer Durchbiegung der Federscheiben 19, die sich zur elastischen Durchbiegung der Ventilfederscheiben 13 zu einer Gesamtkraft addiert, die als Gegenkraft gegen die Druckbeaufschlagung auf die Ventilfederscheiben 13 wirkt. Damit kann das Öffnungsverhalten des Dämpfungsventils 1 in der gezeigten Zugstufe zusätzlich beeinflusst werden durch die Steifigkeit der Federanordnung 19.

Weiterhin ist ein Rückschlagventil 25 mit einer Bypassfunktion in einer geöffneten Position gezeigt, durch das ebenfalls eine geringe Menge an Dämpfungsflüssigkeit vom ersten Dämpfungsflüssigkeitsraum 14 in den zweiten Dämpfungsflüssigkeitsraum 15 gelangt und somit der Durchlassrichtung des Rückschlagventils 24 entgegengesetzt ist, das bereits in Zusammenhang mit Figur 1 beschrieben wurde.

Figur 3 zeigt das Dämpfungsventil 1 in der Druckstufe, in der dieses beispielsweise endseitig an einer Kolbenstange eines Stoßdämpfers entlang der Hubachse 20 nach unten bewegt wird. Dadurch wird der Druck der Dämpfungsflüssigkeit im zweiten Dämpfungsflüssigkeitsraum 15 größer als im ersten Dämpfungsflüssigkeitsraum 14, und es entsteht ein Strömungspfad vom Dämpfungsflüssigkeitsraum 15 in den Dämpfungsflüssigkeitsraum 14 gemäß den gestrichelten Linien. Der Strömungspfad öffnet sich, indem die Dämpfungsflüssigkeit aus dem zweiten Dämpfungsflüssigkeitsraum 15 von unten gegen die Ventilfederscheiben 13 drücken, sodass sich diese unter elastischer Durchbiegung von der Stützkante 22 am zweiten Stützkörper 12 abheben und somit die äußere Randabstützung 17 lösen. Dabei bleibt der Steuerkörper 18 entlang der Hubachse 20 unbewegt, und die Ventilfederscheiben 13 behalten ihren Sitz gegen die innere Randabstützung 16.

Weiterhin gezeigt ist das Rückschlagventil 24 zur Erfüllung einer Bypassfunktion in einem geöffneten Zustand, durch das Dämpfungsflüssigkeit vom zweiten Dämpfungsflüssigkeitsraum 15 in den ersten Dämpfungsflüssigkeitsraum 14 strömt. Das Rückschlagventil 25 bleibt dabei geschlossen.

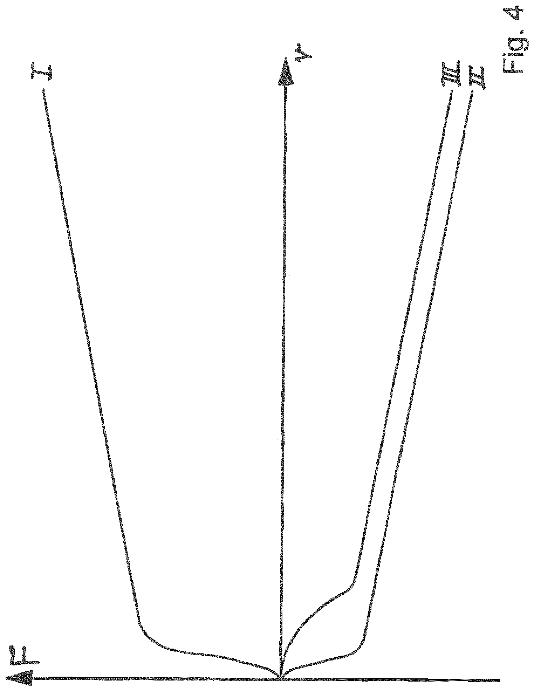

Figur 4 zeigt ein Diagramm mit einer Dämpfungskraft F über einer Bewegungsgeschwindigkeit v, wobei der obere Verlauf I im positiven Kraftbereich den Kraftverlauf der Zugstufe darstellt, wenn die Kolbenstange aus dem Stoßdämpfer ausfährt, und im unteren, negativen Kraftbereich stellt der Verlauf II die Druckstufe dar, die ein Einfahren der Kolbenstange in den Stoßdämpfer beschreibt.

Dabei ist erkennbar, dass der Verlauf der Zugstufe (Figur 2) vom Verlauf der Druckstufe (Figur 3) abweicht, und es stellen sich für die Druckstufe und die Zugstufe unterschiedlich hohe Kräfte ein, die erreicht werden, indem für die Zugstufe das Dämpfungsverhalten des Dämpfungsventils 1 anders ausfällt als in der Druckstufe, da in der Zugstufe die Ventilfederscheiben 19 zusätzlich zu den Ventilfederscheiben 13 aktiviert werden müssen. In der Druckstufe (Figur 3) ist lediglich eine elastische Verformung der Ventilfederscheiben 13 erforderlich.

Weiterhin gezeigt ist ein Verlauf III, der die Kraft wiedergibt, wenn eines der Rückschlagventile 24 und/oder 25 vorhanden ist, wodurch durch die gebildete Bypassfunktion weitere, individuelle Zug- und Druckstufenverläufe einstellbar sind.

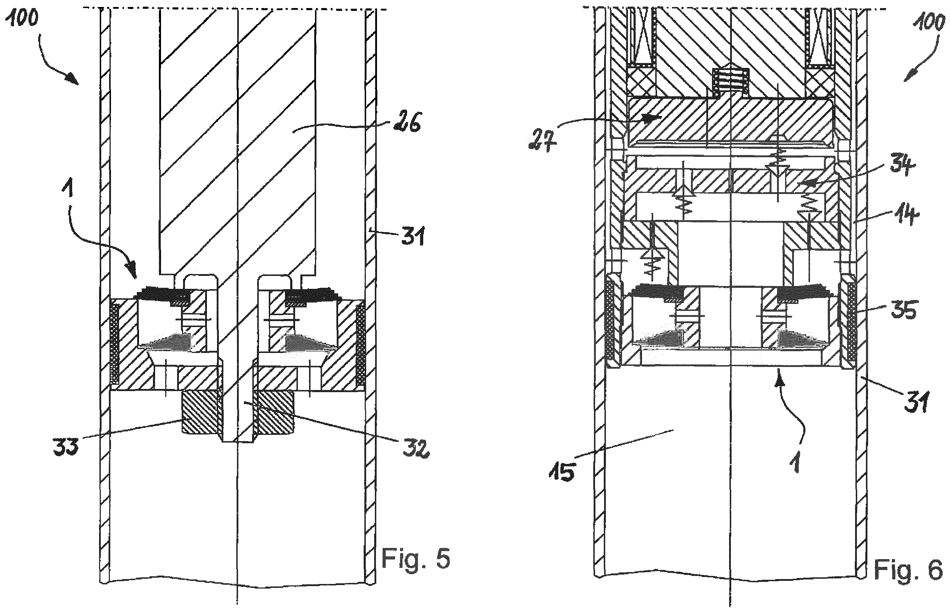

Figur 5 zeigt schließlich einen Ausschnitt eines Stoßdämpfers 100 mit einem Stoßdämpferrohr 31, in dem das Dämpfungsventil 1 endseitig an einer Kolbenstange 26 geführt und mit einem Dichtband 35 gegen die Innenwand des Stoßdämpferrohres 31 abgedichtet ist. Damit ist ein Stoßdämpfer 100 mit einem erfindungsgemäßen Dämpfungsventil 1 gezeigt, wobei dieses über einen Aufnahmezapfen 32 und einer Sicherungsmutter 33 endseitig an der Kolbenstange 26 befestigt ist.

Figur 6 zeigt schließlich ein weiteres Ausführungsbeispiel eines Stoßdämpfers 100 mit einem Dämpfungsventil 1, das in nicht näher gezeigter Weise ebenfalls endseitig an einer Kolbenstange in einem Stoßdämpferrohr 31 eines Stoßdämpfers 100 geführt ist. Das Dämpfungsventil 1 befindet sich in Wirkverbindung mit einem Schaltventil 27, das ebenfalls endseitig an der Kolbenstange angeordnet ist und eine weitere Ventilanordnung 34 zur Beeinflussung des Kraftverlaufs in der Zugstufe und/oder in der Druckstufe bildet, wobei das Schaltventil 27 elektrisch aktivierbar ist. Dabei zeigt das Ausführungsbeispiel, dass das Hüllrohr 10 als Bestandteil des Grundkörpers des Dämpfungsventils 1 über ein Dichtband 35 gegen die Innenseite des Stoßdämpferrohres 31 abgedichtet ist. Dabei bildet sich der erste Dämpfungsflüssigkeitsraum 14 zwischen dem Hüllrohr 10 und dem Stoßdämpferrohr 31 aus, und der zweite Dämpfungsflüssigkeitsraum 15 ist unterhalb des Dämpfungsventils 1 gebildet und durch das Dichtband 35 gegen den ersten Dämpfungsflüssigkeitsraum 14 abgedichtet.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein.

### Bezugszeichenliste

- 100: Stoßdämpfer

- 1: Dämpfungsventil

- 10: Grundkörper, Hüllrohr
- 11: Grundkörper, erster Stützkörper
- 12: Grundkörper, zweiter Stützkörper
- 13: Ventilfederscheibe
- 14: erster Dämpfungsflüssigkeitsraum
- 15: zweiter Dämpfungsflüssigkeitsraum
- 16: innere Randabstützung
- 17: äußere Randabstützung
- 18: Steuerkörper
- 19: Federanordnung, Federscheiben
- 20: Hubachse
- 21: Stützkante am ersten Stützkörper
- 22: Stützkante am zweiten Stützkörper
- 23: Schlitz
- 24: Rückschlagventil
- 25: Rückschlagventil
- 26: Kolbenstange
- 27: Schaltventil
- 28: Zentriersitz
- 29: Öffnungsfenster
- 30: Durchlassöffnung
- 31: Stoßdämpferrohr
- 32: Aufnahmezapfen
- 33: Sicherungsmutter
- 34: Ventilanordnung
- 35: Dichtband

- F: Dämpfungskraft
- v: Bewegungsgeschwindigkeit des Kolbens um Stoßdämpferrohr

- I: Kraftverlauf in der Zugstufe
- II: Kraftverlauf in der Druckstufe
- III: Kraftverlauf mit Zusatzbypass

## Patentansprüche

1. Dämpfungsventil (1) für einen Stoßdämpfer (100), umfassend einen Grundkörper (10, 11, 12) mit einem ersten Stützkörper (11) und mit einem zweiten Stützkörper (12) und umfassend eine oder mehrere Ventilfederscheiben (13), die einen ersten Dämpfungsflüssigkeitsraum (14) von einem zweiten Dämpfungsflüssigkeitsraum (15) trennen, wobei die Ventilfederscheiben (13) über eine innere Randabstützung (16) gegen den ersten Stützkörper (11) und eine äußere Randabstützung (17) gegen den zweiten Stützkörper (12) abgestützt sind und die einen Durchlass an Dämpfungsflüssigkeit in beiden Richtungen dadurch steuern, dass sich die Ventilfederscheiben (13) unter elastischer Durchbiegung entweder von der inneren (16) oder von der äußeren Randabstützung (17) abheben,
**dadurch gekennzeichnet, dass** ein hubbeweglicher Steuerkörper (18) vorgesehen ist, der gegen die Ventilfederscheiben (13) vorgespannt ist, sodass über die Vorspannung des Steuerkörpers (18) das Steuerverhalten der Ventilfederscheiben (13) einstellbar ist.

2. Dämpfungsventil (1) nach Anspruch 1, **dadurch gekennzeichnet, dass** der Steuerkörper (18) durch eine Federanordnung (19) am Grundkörper (12) aufgenommen ist.

3. Dämpfungsventil (1) nach Anspruch 2, **dadurch gekennzeichnet, dass** die Federanordnung (19) durch eine oder mehrere Federscheiben (19) gebildet ist, über die der Steuerkörper (18) in einer Hubachse (20) hubbeweglich und zentriert im Grundkörper (12) aufgenommen ist.

4. Dämpfungsventil (1) nach einem der Ansprüche 1 bis 3, **dadurch gekennzeichnet, dass** die Ventilfederscheiben (13) am Steuerkörper (18) zentriert aufgenommen sind.

5. Dämpfungsventil (1) nach einem der vorgenannten Ansprüche, **dadurch gekennzeichnet, dass** der Grundkörper (10, 11, 12) ein Hüllrohr (10), den ersten Stützkörper (11) und den zweiten Stützkörper (12) aufweist.

6. Dämpfungsventil (1) nach einem der vorgenannten Ansprüche, **dadurch gekennzeichnet, dass** wenigstens eine der Ventilfederscheiben (13) im Bereich einer Randabstützung (16, 17) einen Schlitz (23) aufweist, durch den ein Bypass zur Durchströmung mit Dämpfungsflüssigkeit gebildet ist.

7. Dämpfungsventil (1) nach einem der vorgenannten Ansprüche, **dadurch gekennzeichnet, dass** im Grundkörper (11) wenigstens ein Rückschlagventil (24, 25) zur Erfüllung einer Bypassfunktion angeordnet ist, das im Öffnungszustand eine zusätzliche Durchströmung mit Dämpfungsflüssigkeit ermöglicht.

8. Stoßdämpfer (100) mit einem Dämpfungsventil (1), gemäß Anspruch 1.

9. Stoßdämpfer (100) nach Anspruch 8, **dadurch gekennzeichnet, dass** das Dämpfungsventil (1) an einer Kolbenstange (26) des Stoßdämpfers (100) angeordnet ist.

10. Stoßdämpfer (100) nach Anspruch 8 oder 9, **dadurch gekennzeichnet, dass** der Stoßdämpfer (100) ein elektrisches Schaltventil (27) aufweist, wobei das Dämpfungsventil (1) in Wirkverbindung mit dem Schaltventil (27) im Stoßdämpfer (100) angeordnet ist.

## Claims

1. Damping valve (1) for a shock absorber (100), comprising a base body (10, 11, 12) with a first support body (11) and with a second support body (12) and comprising one or more valve spring discs (13) which separate a first damping fluid space (14) from a second damping fluid space (15), wherein the valve spring discs (13) are supported against the first support body (11) via an inner edge support (16), and against the second support body (12) via an outer edge support (17), and which control a passage of damping fluid in both directions by virtue of the fact that the valve spring discs (13) lift off either from the inner edge support (16) or from the outer edge support (17), with elastic deflection,
**characterized in that** a reciprocatingly movable control body (18) is provided which is prestressed against the valve spring discs (13), with the result that the control behaviour of the valve spring discs (13) can be adjusted by means of the prestress of the control body (18).

2. Damping valve (1) according to Claim 1,
**characterized in that** the control body (18) is held on the base body (12) by means of a spring arrangement (19).

3. Damping valve (1) according to Claim 2,
**characterized in that** the spring arrangement (19) is formed by one or more spring discs (19) by means of which the control body (18) is held in a reciprocatingly movable fashion in a stroke axis (20), centred in the base body (12).

4. Damping valve (1) according to one of Claims 1 to 3, **characterized in that** the valve spring discs (13) are held centred on the control body (18).

5. Damping valve (1) according to one of the preceding claims, **characterized in that** the base body (10, 11, 12) has a sleeve tube (10), the first support body (11) and the second support body (12).

6. Damping valve (1) according to one of the abovementioned claims, **characterized in that** at least one of the valve spring discs (13) has, in the region of an edge support (16, 17), a slot (23), which forms a bypass for the damping fluid to flow through.

7. Damping valve (1) according to one of the preceding claims, **characterized in that** arranged in the base body (11) is at least one non-return valve (24, 25) for performing a bypass function, which non-return valve (24, 25) permits, in the open state, an additional throughflow of damping fluid.

8. Shock absorber (100) having a damping valve (1), according to Claim 1.

9. Shock absorber (100) according to Claim 8,
**characterized in that** the damping valve (1) is arranged on a piston rod (26) of the shock absorber (100).

10. Shock absorber (100) according to Claim 8 or 9,
**characterized in that** the shock absorber (100) has an electric shift valve (27), wherein the damping valve (1) is arranged in operative connection to the shift valve (27) in the shock absorber (100).

## Revendications

1. Soupape d'amortissement (1) pour un amortisseur (100), comprenant un corps de base (10, 11, 12) avec un premier corps de maintien (11) et avec un deuxième corps de maintien (12) et comprenant un ou plusieurs disques de ressort de soupape (13) séparant une première chambre de fluide d'amortissement (14) d'une deuxième chambre de fluide d'amortissement (15), les disques de ressort de soupape (13) étant maintenus, via un appui de bordure (16) intérieur, contre le premier corps de maintien (11) et, via un appui de bordure (17) extérieur, contre le deuxième corps de maintien (12) et lesdits disques commandant un passage de fluide d'amortissement dans les deux directions de façon à ce que les disques de ressort de soupape (13) se soulèvent du fait de la flexion élastique soit à partir de l'appui de bordure intérieur (16) soit à partir de l'appui de bordure extérieur (17), **caractérisée en ce qu'**un corps de commande (18) pouvant effectuer un mouvement de course est prévu, ce corps étant précontraint contre les disques de ressort de soupape (13), de sorte que le comportement de commande des disques de ressort de soupape (13) soit réglable via la précontrainte du corps de commande (18).

2. Soupape d'amortissement (1) selon la revendication 1, **caractérisée en ce que** le corps de commande (18) est reçu par un agencement de ressort (19) au niveau du corps de base (12).

3. Soupape d'amortissement (1) selon la revendication 2, **caractérisée en ce que** l'agencement de ressort (19) est formé par un ou plusieurs disques de ressort (19) via lesquels le corps de commande (18) est reçu de façon à effectuer un mouvement de course dans un axe de course (20) et reçu de façon centrée dans le corps de base (12).

4. Soupape d'amortissement (1) selon l'une quelconque des revendications 1 à 3, **caractérisée en ce que** les disques de ressort de soupape (13) sont reçus de façon centrée au niveau du corps de commande (18).

5. Soupape d'amortissement (1) selon l'une quelconque des revendications précédentes, **caractérisée en ce que** le corps de base (10, 11, 12) comporte un tube-fourreau (10), le premier corps de maintien (11) et le deuxième corps de maintien (12).

6. Soupape d'amortissement (1) selon l'une quelconque des revendications précédentes, **caractérisée en ce qu'**au moins un des disques de ressort de soupape (13) comporte, dans la région d'un appui de bordure (16, 17), une fente (23) à travers laquelle une dérivation est formée pour faire s'écouler le fluide d'amortissement.

7. Soupape d'amortissement (1) selon l'une quelconque des revendications précédentes, **caractérisée en ce qu'**au moins une soupape de retenue (24, 25) est disposée dans le corps de base (11) pour remplir une fonction de dérivation, ladite soupape permettant, dans l'état d'ouverture, un écoulement supplémentaire de fluide d'amortissement.

8. Amortisseur (100) avec une soupape d'amortissement (1) selon la revendication 1.

9. Amortisseur (100) selon la revendication 8, **caractérisé en ce que** la soupape d'amortissement (1) est disposée au niveau d'une tige de piston (26) de l'amortisseur (100).

10. Amortisseur (100) selon la revendication 8 ou 9, **caractérisé en ce que** l'amortisseur (100) comporte une soupape de commutation (27) électrique, la soupape d'amortissement (1) étant disposée de façon à être en liaison active avec la soupape de commutation (27) prévue dans l'amortisseur (100).
